# EUROPEAN PATENT APPLICATION

(11) **EP 4 822 544 A1**
(43) Date of publication of application: **14.10.2026**
(21) Application number: 24907400.6
(22) Date of filing: 17.12.2024
(51) Int. Cl.: G06F 11/36

(54) **MODEL INSPECTION DEVICE, MODEL INSPECTION METHOD, AUTOMOBILE MANUFACTURING METHOD, AND PROGRAM**

(30) Priority: 22.12.2023 JP 2023217272
(71) Applicant: Inter-University Research Institute Corporation Research Organization of Information and Systems, Tachikawa-shi, Tokyo 190-0014 (JP); Tohoku University, Sendai-shi, Miyagi 980-8577 (JP)
(72) Inventor: WATANABE, Kazuki, Chiyoda-ku Tokyo 101-8430 (JP); HASUO, Ichiro, Chiyoda-ku Tokyo 101-8430 (JP); EBERHART, Clovis, Chiyoda-ku Tokyo 101-8430 (JP); ASADA, Kazuyuki, Sendai-shi, Miyagi 980-8577 (JP)
(74) Representative: Richardt Patentanwälte PartG mbB
(86) International application number: PCT/JP2024/044545
(87) International publication number: WO 2025/135015

(57) **Abstract**

A model checking device includes a model acquisition unit configured to acquire a state transition model representing state transitions between a plurality of components, a local mathematical feature acquisition unit configured to acquire one or more predetermined local mathematical features associated with each of the plurality of components, a global mathematical feature calculation unit configured to calculate one or more global mathematical features associated with the state transition model based on the local mathematical features associated with the plurality of components, and a checking unit configured to perform model checking on the state transition model based on the one or more global mathematical features.

## Description

### TECHNICAL FIELD

The present invention relates to a model checking device, a model checking method, an automobile manufacturing method, and a program.

### BACKGROUND ART

Model checking, which is a type of formal verification, is a technique for verifying whether a model derived from a design of hardware or software satisfies formal specifications by exhaustive search. Model checking has attracted attention as an automatic verification technique, and various model checking techniques have been proposed.

For example, Non-Patent Document 1 discloses a compositional divide-and-conquer algorithm that processes a Markov decision process having a hierarchical structure of components in a divide-and-conquer manner in order to solve the state-space explosion problem of probabilistic model checking.

### RELATED ART DOCUMENTS

### NON-PATENT DOCUMENT

Non-Patent Document 1: Kazuki Watanabe, Clovis Eberhart, Kazuyuki Asada, and Ichiro Hasuo, "Compositional Probabilistic Model Checking with String Diagrams of MDPs", CAV 2023, pp. 40-61, 2023.

### SUMMARY OF THE INVENTION

### PROBLEMS TO BE SOLVED BY THE INVENTION

However, prior art does not assume that model checking is performed on models that include components having unknown internal structures.

In view of the above technical problems, it is an object of the present invention to perform model checking on models that include components having unknown internal structures.

### MEANS FOR SOLVING THE PROBLEMS

In order to solve the above problems, a model checking device according to one aspect of the present invention includes a model acquisition unit configured to acquire a state transition model representing state transitions between a plurality of components, a local mathematical feature acquisition unit configured to acquire one or more predetermined local mathematical features associated with each of the plurality of components, a global mathematical feature calculation unit configured to calculate one or more global mathematical features associated with the state transition model based on the local mathematical features associated with the plurality of components, and a checking unit configured to perform model checking on the state transition model based on the one or more global mathematical features.

### EFFECTS OF THE INVENTION

According to one aspect of the present invention, model checking can be performed on models that include components having unknown internal structures.

### BRIEF DESCRIPTION OF THE DRAWINGS

[FIG. 1] FIG. 1 is a diagram illustrating an example of a composite Markov decision process.
[FIG. 2] FIG. 2 is a diagram illustrating an example of the composite Markov decision process.
[FIG. 3] FIG. 3 is a diagram illustrating an example of a white-box model.
[FIG. 4] FIG. 4 is a diagram illustrating an example of a black-box model.
[FIG. 5] FIG. 5 is a diagram illustrating an example of a black-box model with known mathematical features.
[FIG. 6] FIG. 6 is a diagram for explaining the compositionality.
[FIG. 7] FIG. 7 is a block diagram illustrating an example of an overall configuration of a model checking system.
[FIG. 8] FIG. 8 is a block diagram illustrating an example of a hardware configuration of a computer.
[FIG. 9] FIG. 9 is a block diagram illustrating an example of a functional configuration of the model checking system.
[FIG. 10] FIG. 10 is a flowchart illustrating an example of a model checking method.

### DESCRIPTION OF EMBODIMENTS

Hereinafter, each embodiment of the present invention will be described with reference to the accompanying drawings. In this specification and the drawings, constituent elements having substantially the same functional configuration are denoted by the same reference numerals, and redundant descriptions of such constituent elements will be omitted.

### [Embodiment]

One embodiment of the present invention is a model checking system for performing model checking on a state transition model. The state transition model in the present embodiment includes a plurality of components, and is a model in which state transitions occur between the components.

A state transition model in the present embodiment may be a quantitative state transition model for calculating quantitative measures. The quantitative measures may include a transition probability or a reward. The quantitative state transition model may be a Markov decision process or a mean-payoff game. Markov decision processes are probabilistic models in which state transitions occur probabilistically. In the case where the state transition model is a Markov decision process, the quantitative measures may include a reachability probability an output from an input and an expected reward (an expected value of a reward).

### <Background>

Probabilistic system models account for the inherent uncertainty of real-world systems. Probabilistic model checking yields quantitative results, enabling more fine-grained evaluation than qualitative verification.

One example of a probabilistic system model is a Markov decision process (MDP). Model checking of Markov decision processes is highly practical because it can not only verify specifications (i.e., compute optimal expected rewards) but also synthesize optimal control strategies. Theoretically, probabilistic model checking has a problem that continuous quantities (namely, probabilities) are involved in the problem, but many efficient algorithms for probabilistic model checking have been proposed.

However, even existing efficient algorithms cannot realistically verify highly complex models. As model complexity grows, the so-called state-space explosion problem arises, resulting in model sizes that exceed the memory capacity of the verification system.

An effective countermeasure to the state-space explosion problem is compositional divide-and-conquer. Compositional divide-and-conquer uses a model structure in which small components are connected in multiple layers, and processes the model in a divide-and-conquer manner. Especially, in a model with repetition between components, the calculation results of each component are repeatedly used to obtain intermediate results, which leads to improvement of processing performance.

In the model checking of Markov decision processes, many compositional model checking methods have been proposed for various settings. For example, in probabilistic automata, a method for processing composite Markov decision processes by parallel composition has been proposed (see Reference Document 1). Reference Document 1 employs an assume-guarantee style verification algorithm based on multiobjective probabilistic model checking. However, this method requires manual discovery of assumptions and guarantees among parallel components, and is not fully automatic.

### [Reference Document 1]

Kwiatkowska, M.Z., Norman, G., Parker, D., Qu, H., "Compositional probabilistic verification through multi-objective model checking", Information and Computation. vol. 232, pp. 38-65, 2013.

Another example is hierarchical model checking for Markov decision processes (see Reference Document 2). Reference Document 2 deals with a sequential composition rather than a parallel configuration, and proposes a model checking algorithm for calculating the optimal expected reward on the assumption that there is parametric homogeneity of components (in other words, the shape of the component is the same, but the parameter values can change). However, this method has a problem that there are many restrictions on how to combine components, and backtracking is not allowed.

### [Reference Document 2]

Junges, S., Spaan, M.T.J., "Abstraction-refinement for hierarchical probabilistic models", CAV 2022, pp. 102-123, 2022.

Non-Patent Document 1 discloses a compositional divide-and-conquer algorithm to solve these problems. Non-Patent Document 1 proposes a method to compose Markov decision processes using a formal graphical language called string diagrams and to calculate optimal expected rewards. This method has a high degree of freedom in how components are combined, and it is possible to perform fully automatic model checking.

One of the key elements of the compositional divide-and-conquer algorithm is that it has the compositionality as preservation of algebraic structures. More specifically, the reductive divide-and-conquer algorithm specifies a compositional solution as a homomorphism of suitable monoidal categories. Another key element of the compositional divide-and-conquer algorithm is an equation called a decomposition equality. The decomposition equality is an equality obtained by extending reachability-probability equalities to expected rewards.

However, the compositional divide-and-conquer algorithm assumes that the internal structures of all components included in a model to be checked are known. Conversely, the algorithm does not contemplate performing model checking on a model that includes components having unknown internal structures.

An unknown internal structure means that only the input and the output are known and the behavior from the input to the output is unclear. For example, a state transition model can be represented by a graph consisting of nodes and edges. An unknown internal structure means, for example, that the number of nodes, connections between nodes, rewards obtained at nodes, transition probabilities of edges, and the like are not disclosed.

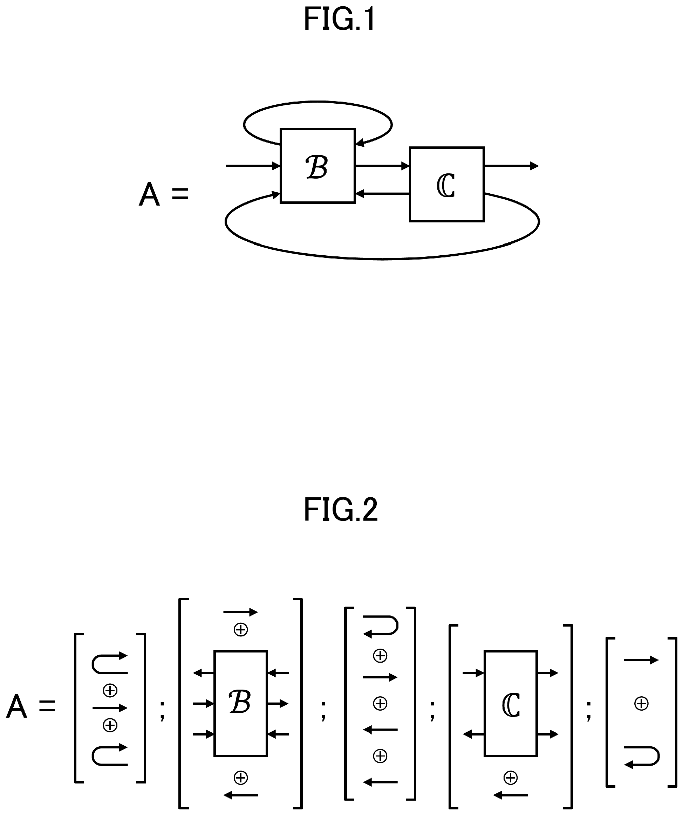

FIGS. 1 and 2 are diagrams illustrating examples of composite Markov decision processes. As illustrated in FIG. 1, the composite Markov decision process model A includes components B and C. Components B and C may be Markov decision processes or other models. The composite Markov decision process model A illustrated in FIG. 1 can be divided as illustrated in FIG. 2. In FIG. 2, the semicolon (;) represents sequential composition, the circled plus sign represents a sum, and the arrow represents a constant wire.

In model checking of the Markov decision process model, it is necessary to calculate an expected reward based on the behavior when an action is selected in each state (position). In FIG. 2, if the internal structures of components B and C are not disclosed, the behavior of the composite Markov decision process model A cannot be derived. As a result, the model checking cannot be performed on the composite Markov decision process model A.

An object of the present embodiment is to enable model checking for models that include components having unknown internal structures. To this end, the present embodiment proposes a method that allows model checking to proceed even when the internal structures of components included in a model are unknown, model checking is possible if mathematical features used for model checking are known. In one aspect, the method enables model checking of models that include components with unknown internal structures.

### <Outline of Model Checking>

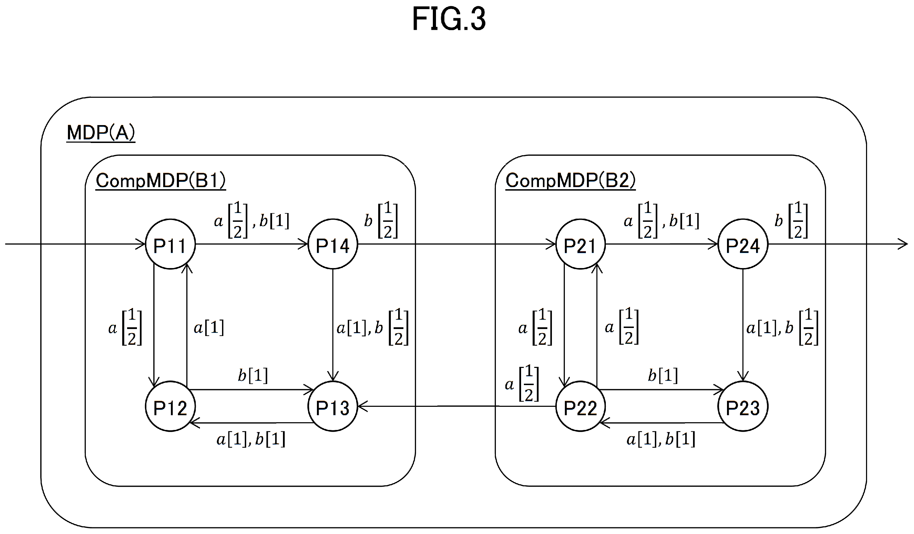

An outline of model checking in the present embodiment will be described with reference to FIGS. 3 through 5.

FIG. 3 is a diagram illustrating an example of a white-box model. The white-box model is a state transition model in which the internal structures of the components are known.

As illustrated in FIG. 3, the state transition model MDP(A) includes components CompMDP(B1) and CompMDP(B2). In the component CompMDP(B1) illustrated in FIG. 3, the internal structures, such as the number of positions P11 through P14, the connections among these positions, and the transition probabilities between these positions, are clear. Similarly, in the component CompMDP(B2), the internal structures, such as the number of positions P21 through P24, the connections among these positions, and the transition probabilities between these positions, are clear.

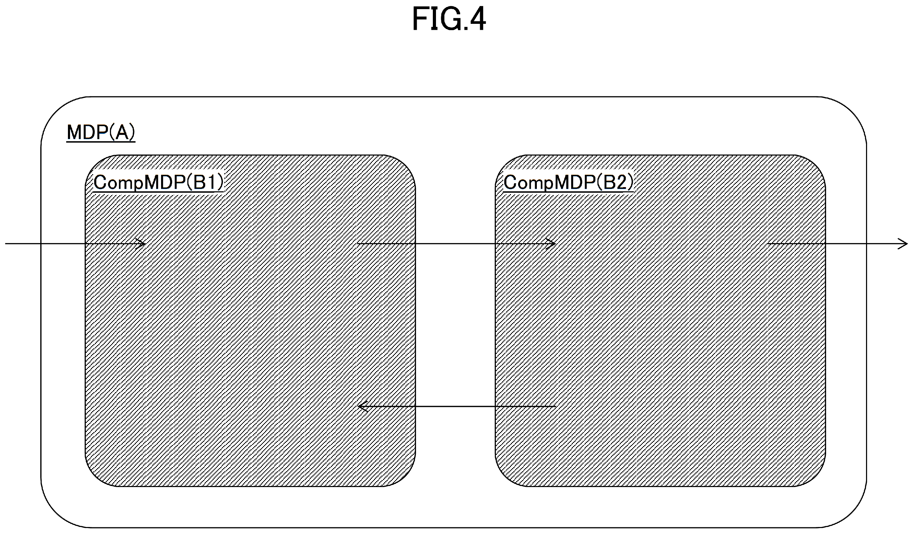

FIG. 4 is a diagram illustrating an example of a black-box model. A black-box model is a state transition model in which the internal structures of components are unknown. The black-box model includes a state transition model in which the internal structures of some components are unknown and the internal structures of other components are known.

The inputs and outputs of the components CompMDP(B1) and CompMDP(B2) illustrated in FIG. 4 are clear, but the internal structures are unclear.
Although the internal structures of both the components CompMDP(B1) and CompMDP(B2) included in the state transition model MDP(A) are unknown in the example of FIG. 4, the internal structure of either one of the components may be unknown.

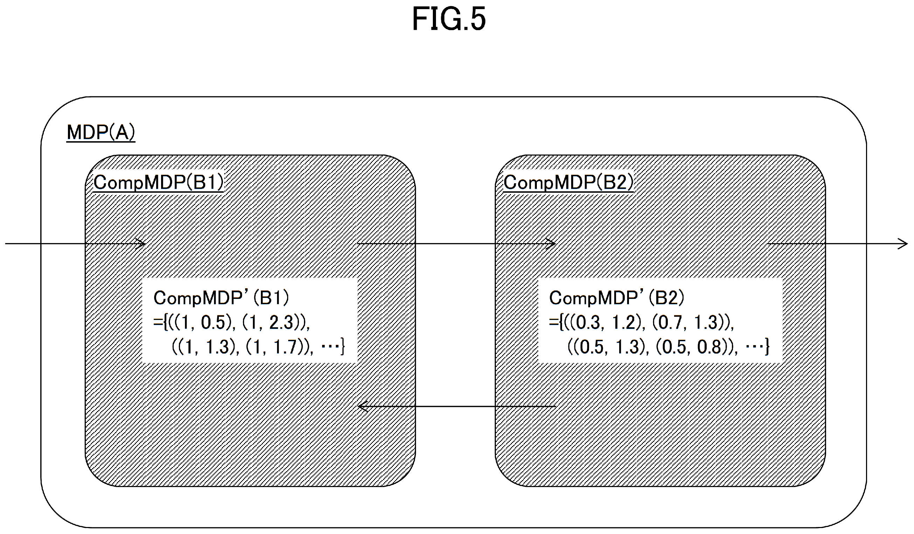

FIG. 5 is a diagram illustrating an example of a black-box model having known mathematical features. Although the internal structure is unclear, mathematical features CompMDP'(B1) of the component CompMDP(B1) illustrated in FIG. 5 are disclosed. Similarly, although the internal structure is unclear, mathematical features CompMDP'(B2) of the component CompMDP(B2) illustrated in FIG. 5 are disclosed.

Mathematical features CompMDP' are performance metrics corresponding to behavior, performance, or contract of each component. As illustrated in FIG. 5, the model checking in the present embodiment is a method that enables model checking even in a black-box model, as long as the mathematical features associated with each component are disclosed.

In the model checking of the present embodiment, the state transition model may include components having known internal structures. At this time, the mathematical features associated with the components having known internal structures need not be disclosed. Since the behavior of the model can be derived for the components having known internal structures, the mathematical features may be calculated based on the behavior of the model.

### <Compositionality>

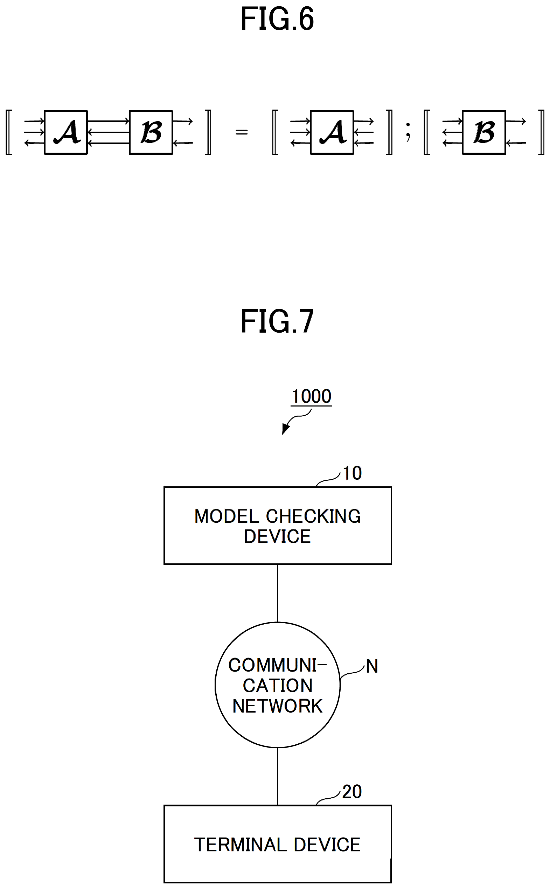

In the present embodiment, the compositionality is used to enable the model checking for black-box models. FIG. 6 is a diagram for explaining the compositionality.

In FIG. 6, the square brackets ([ ]) represent mathematical features . FIG. 6 shows that the mathematical features associated with the components A and B, [A] and [B], are calculated respectively and the calculation results are combined, in order to calculate the mathematical features [A;B] of the model.

Using the compositionality, even if the internal structure of component B is unknown, it is possible to calculate the mathematical features [A;B] of the model as long as the mathematical features [B] are known. In order to make the mathematical features known, for example, the provider of component B may disclose only the mathematical features without revealing the internal structure. For example, various inputs may be given to component B and the mathematical features may be calculated based on the output for each input.

### <Mathematical Features>

The mathematical features in the present embodiment will be described in more detail. The mathematical features include quantitative measures used for model checking and predetermined additional information. The additional information is information used for calculating one quantitative measure from a plurality of quantitative measures . In the case where the state transition model is a Markov decision process, a quantitative measure is an expected reward, and the additional information is a reachability probability.

The mathematical features associated with the multi-input multi-output state transition model can be expressed by Expression (1). Herein, the state transition model is a Markov decision process.
[Math. 1] $\left\{{\left[{RPr}^{τ}\left(i, j\right),{ERw}^{τ}\left(i, j\right)\right]}_{i , j}\left|τ\right.\right\}$ (1)

In the expression, τ is a scheduler. The scheduler is a function which determines the action to be taken at each position. RPrτ(i, j) is a reachability probability the output j from the input i under scheduler τ. ERwτ(i, j) is the expected reward obtained by reaching the output j from the input i under scheduler τ. As illustrated in Expression (1), mathematical features are information in which reachability probabilities and expected rewards for all combinations of the input i, the output j, and the scheduler τ are enumerated.

Hereinafter, the mathematical features associated with each component are also called "local mathematical features", and the mathematical features associated with the whole model are also called "global mathematical features". However, both local mathematical features and global mathematical features can be expressed by Expression (1).

The global mathematical features associated with model A that includes components B and C can be calculated by the algorithm illustrated in Expression (2). Model A is a Markov decision process in which the number of inputs from the left direction is mr, the number of inputs from the right direction is ml, the number of inputs to the left direction is nr, and the number of outputs to the right direction is nl.
[Math. 2]

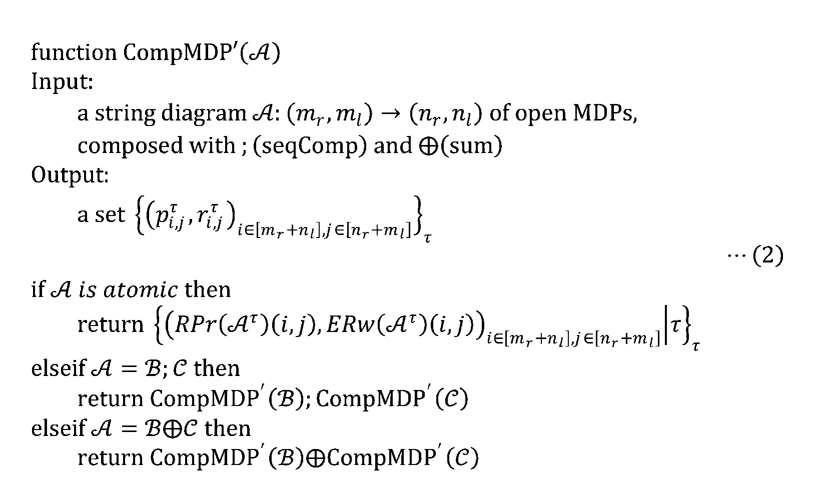

In the expression, seqComp is a sequential composition, sum is a sum, τ is a scheduler of model A, pri, j is a reachability probability the output j from the input i under scheduler τ, and rτi, j is an expected reward obtained before reaching the output j from the input i under scheduler τ.

Model checking using global mathematical features can be performed by the algorithm illustrated in Expression (3). Herein, model A is a Markov decision process with one input and one output. As illustrated in Expression (3), model checking for a Markov decision process with one input and one output calculates the maximum expected reward over schedulers τ.
[Math. 3]

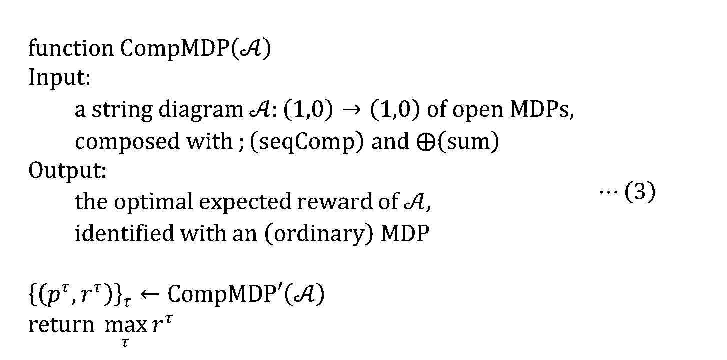

In the expression, pτ is a set of reachability probabilities for scheduler τ, and rτ is a set of expected rewards for scheduler τ.

### <Overall Configuration>

The overall configuration of the model checking system in the present embodiment will be described with reference to FIG. 7. FIG. 7 is a block diagram illustrating an example of the overall configuration of the model checking system.

As illustrated in FIG. 7, the model checking system 1000 includes a model checking device 10 and a terminal device 20. The model checking device 10 and the terminal device 20 are connected to each other via a communication network N, such as a LAN (local area network) or the Internet, so as to enable data communication.

The model checking device 10 is an information processing device such as a personal computer, a workstation, or a server for performing model checking. The model checking device 10 receives a state transition model to be checked from the terminal device 20 and performs model checking on the state transition model. The model checking device 10 transmits checking results to the terminal device 20.

The terminal device 20 is an information processing terminal, such as a personal computer, a smartphone, or a tablet terminal operated by a user of the model checking system 1000. The terminal device 20 transmits a state transition model that is input by the user to the model checking device 10. The terminal device 20 receives checking results from the model checking device 10 and presents the checking results to the user.

The overall configuration of the model checking system 1000 illustrated in FIG. 7 is merely an example, and various system configurations may be adopted depending on the application and purpose. For instance, the model checking system 1000 may include one or more model checking devices 10 and terminal devices 20. The model checking systems 10 may be implemented using a plurality of computers or as a cloud computing service, or alternatively, the model checking system 1000 may be realized by a stand-alone computer. The classification of devices shown in FIG. 7, such as the model checking device 10 and the terminal device 20, is merely an example.

### <Hardware Configuration>

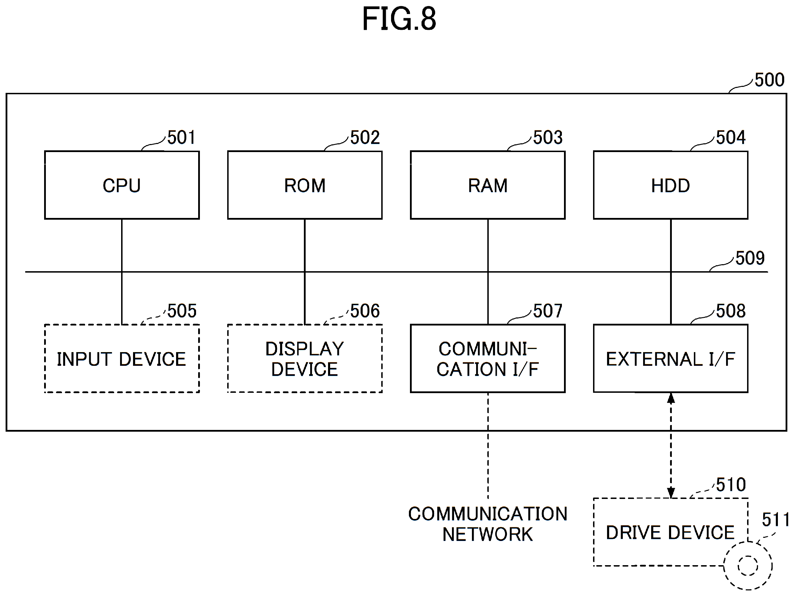

The model checking device 10 and the terminal device 20 in the present embodiment may be realized by a computer, for example. FIG. 8 is a block diagram illustrating an example of a hardware configuration of a computer.

As illustrated in FIG. 8, the computer 500 includes a CPU (central processing unit) 501, a ROM (read only memory) 502, a RAM (random access memory) 503, an HDD (hard disk drive) 504, an input device 505, a display device 506, a communication I/F (interface) 507, and an external I/F 508. The CPU 501, the ROM 502, and the RAM 503 form a so-called computer. The hardware components of the computer 500 are connected to each other via a bus line 509. The input device 505 and the display device 506 may be connected to the external I/F 508.

The CPU 501 is an arithmetic unit that reads programs and data from a storage device such as the ROM 502 or the HDD 504 into the RAM 503 and executes processing, thereby realizing control and functions of the entire computer 500. The computer 500 may include a GPU (graphics processing unit) in addition to the CPU 501 or in place of the CPU 501.

The ROM 502 is an example of a nonvolatile semiconductor memory (storage device) that can retain programs and data even when the power is turned off. The ROM 502 functions as a main storage device for storing various programs and data necessary for the CPU 501 to execute various programs installed in the HDD 504. Specifically, the ROM 502 stores boot programs such as BIOS (basic input/output system) and EFI (extensible firmware interface) that are executed when the computer 500 is started, and data such as OS (operating system) settings and network settings.

The RAM 503 is an example of a volatile semiconductor memory (storage device) whose programs and data are erased when the power is turned off. The RAM 503 is, for example, DRAM (dynamic random access memory) or SRAM (static random access memory). The RAM 503 provides a work area that is expanded when various programs installed in the HDD 504 are executed by the CPU 501.

The HDD 504 is an example of a nonvolatile storage device for storing programs and data. Programs and data stored in the HDD 504 include an OS, which is basic software for controlling the entire computer 500, and applications for providing various functions on the OS. Instead of the HDD 504, the computer 500 may use a storage device (for example, a solid state drive (SSD)) that uses a flash memory as a storage medium.

The input device 505 includes a touch panel used by a user for inputting various signals, operation keys and buttons, a keyboard and mouse, a microphone for inputting sound data such as voice, and the like.

The display device 506 includes a liquid crystal display or an organic EL (electro-luminescence) display for displaying a screen, a speaker for outputting sound data such as voice, and the like.

The communication I/F 507 is an interface for connecting to a communication network and allowing the computer 500 to perform data communication.

The external I/F 508 is an interface with an external device. The external device includes a drive device 510 or the like.

The drive device 510 is a device for setting a recording medium 511. The recording medium 511 described herein includes a medium for optically, electrically, or magnetically recording information, such as a CD-ROM, a flexible disk, a magneto-optical disk, or the like. The recording medium 511 may also include a semiconductor memory for electrically recording information, such as a ROM, a flash memory, or the like. Thus, the computer 500 can read data from and/or write data to the recording medium 511 via the external I/F 508.

The various programs installed in the HDD 504 are installed, for example, when the distributed recording medium 511 is set in the drive device 510 connected to the external I/F 508 and the various programs recorded in the recording medium 511 are read by the drive device 510. Alternatively, various programs installed in the HDD 504 may be downloaded from another network different from the communication network via the communication I/F 507.

### <Functional Configuration>

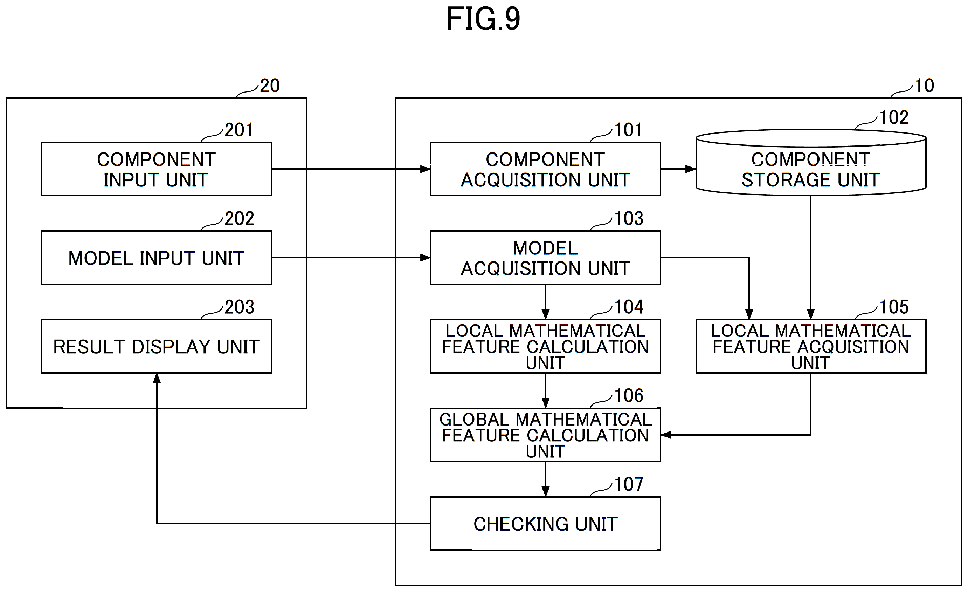

The functional configuration of the model checking system 1000 in the present embodiment will be described with reference to FIG. 9. FIG. 9 is a block diagram illustrating an example of the functional configuration of the model checking system.

### <<Model Checking Device>>

As illustrated in FIG. 9, the model checking device 10 in the present embodiment includes a component acquisition unit 101, a component storage unit 102, a model acquisition unit 103, a local mathematical feature calculation unit 104, a local mathematical feature acquisition unit 105, a global mathematical feature calculation unit 106, and a checking unit 107.

The component acquisition unit 101, the model acquisition unit 103, the local mathematical feature calculation unit 104, the local mathematical feature acquisition unit 105, the global mathematical feature calculation unit 106, and the checking unit 107 are realized, for example, by a process in which a program is expanded from the HDD 504 to the RAM 503 illustrated in FIG. 8 and executed by the CPU 501.

The component storage unit 102 is realized by, for example, the RAM 503 or the HDD 504 illustrated in FIG. 8.

The component acquisition unit 101 acquires component information regarding a component. The component acquisition unit 101 may acquire component information by receiving the component information from the terminal device 20. The component acquisition unit 101 may acquire component information that is input by the user through the input device 505.

The component information includes information indicating a component and predetermined local mathematical features associated with the component. The component information includes information regarding a component having an unknown internal structure. The component information may include information regarding a component having a known internal structure.

The component storage unit 102 stores component information acquired by the component acquisition unit 101. The component storage unit 102 may store component information that includes local mathematical features calculated by the local mathematical feature calculation unit 104.

The model acquisition unit 103 acquires a state transition model to be checked (hereinafter also referred to as a "target model"). The model acquisition unit 103 may acquire the target model by receiving the target model from the terminal device 20. The model acquisition unit 103 may acquire the target model that is input by the user through the input device 505.

The target model is a state transition model in which a plurality of components are represented as states, and state transitions are performed between the components. The state transition model may be a quantitative state transition model. The quantitative state transition model may be a Markov decision process or a mean-payoff game. The target model may include a component having an unknown internal structure.

The local mathematical feature calculation unit 104 calculates local mathematical features associated with a component included in the target model acquired by the model acquisition unit 103. The local mathematical feature calculation unit 104 calculates local mathematical features associated with a component having a known internal structure among the components included in the target model. The local mathematical feature calculation unit 104 does not need to calculate local mathematical features associated with the component whose local mathematical features are acquired by the local mathematical feature acquisition unit 105.

The local mathematical feature acquisition unit 105 acquires local mathematical features from the component storage unit 102 based on the target model acquired by the model acquisition unit 103. The local mathematical feature acquisition unit 105 acquires local mathematical features associated with a component having an unknown internal structure among the components included in the target model. If the local mathematical features associated with the component having a known internal structure are stored in the component storage unit 102, the local mathematical feature acquisition unit 105 may acquire the local mathematical features.

The global mathematical feature calculation unit 106 calculates the global mathematical features associated with the target model acquired by the model acquisition unit 103 based on the local mathematical features calculated by the local mathematical feature calculation unit 104 and the local mathematical features acquired by the local mathematical feature acquisition unit 105.

The checking unit 107 performs model checking based on the global mathematical features calculated by the global mathematical feature calculation unit 106. The checking unit 107 may perform model checking based on a compositional divide-and-conquer algorithm. The checking unit 107 transmits checking results regarding the target model to the terminal device 20. The checking unit 107 may output the checking results regarding the target model to the display device 506 of the model checking device 10.

### <<Terminal Device>>

As illustrated in FIG. 9, the terminal device 20 in the present embodiment includes a component input unit 201, a model input unit 202, and a result display unit 203.

The component input unit 201, the model input unit 202, and the result display unit 203 are realized, for example, by a process in which a program loaded from the HDD 504 expanded onto the RAM 503 illustrated in FIG. 8 is executed by the CPU 501.

The component input unit 201 accepts input of component information in response to a user operation. The component input unit 201 transmits the accepted component information to the model checking device 10.

The model input unit 202 accepts input of a target model in response to a user operation. The model input unit 202 transmits the accepted target model to the model checking device 10.

The result display unit 203 receives the checking results from the model checking device 10. The result display unit 203 outputs the received checking results to the display device 506 of the terminal device 20.

### <Model Checking Method>

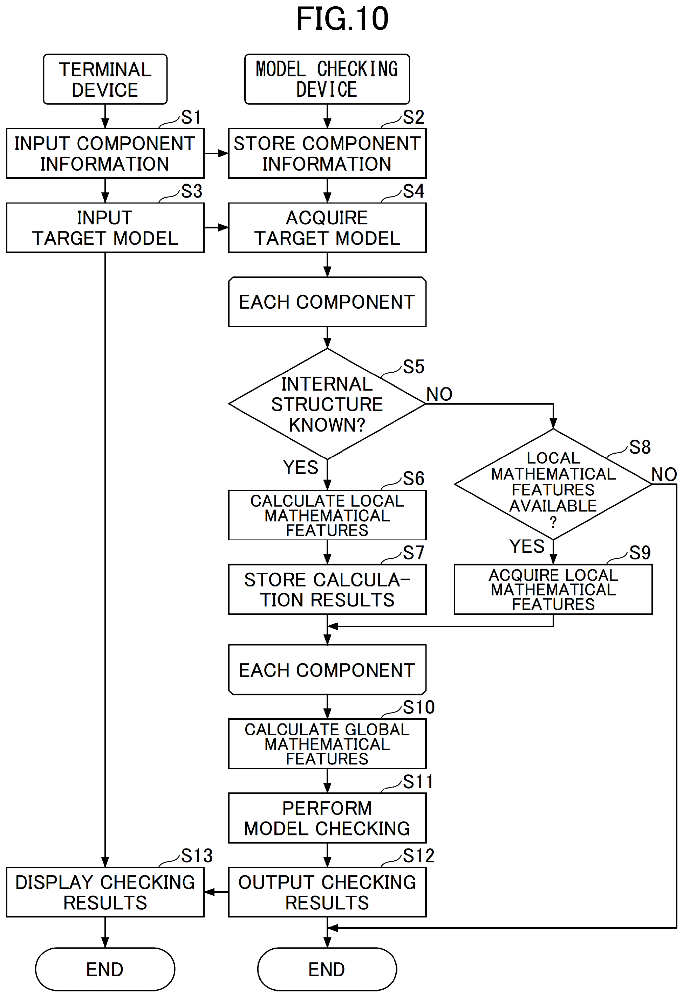

A model checking method performed by the model checking system 1000 in the present embodiment will be described with reference to FIG. 10. FIG. 10 is a flowchart illustrating an example of the model checking method.

In step S1, the component input unit 201 of the terminal device 20 accepts input of component information in response to a user operation. Next, the component input unit 201 transmits the accepted component information to the model checking device 10.

In step S2, the component acquisition unit 101 of the model checking device 10 receives the component information from the terminal device 20. Next, the component acquisition unit 101 accepts input of the received component information. Then, the component acquisition unit 101 stores the accepted component information in the component storage unit 102.

In step S3, the model input unit 202 of the terminal device 20 accepts input of a target model in response to a user operation. Next, the model input unit 202 transmits the accepted target model to the model checking device 10.

In step S4, the model acquisition unit 103 of the model checking device 10 receives the target model from the terminal device 20. Next, the model acquisition unit 103 accepts input of the received target model.

The processes from step S5 to step S9 are performed on each component included in the target model acquired in step S4.

In step S5, the model acquisition unit 103 of the model checking device 10 selects, from the components included in the target model, a component on which the processes from step S5 to step S9 have not been performed. Hereinafter, the selected component is referred to as a "target component". The model acquisition unit 103 determines whether the internal structure of the target component is known or unknown.

If the internal structure of the target component is known (Yes in step S5), the model acquisition unit 103 transmits information regarding the target component to the local mathematical feature calculation unit 104 and proceeds to step S6. On the other hand, if the internal structure of the target component is unknown (No in step S5), the model acquisition unit 103 transmits information regarding the target component to the local mathematical feature acquisition unit 105 and proceeds to step S8.

In step S6, the local mathematical feature calculation unit 104 of the model checking device 10 receives the information regarding the target component from the model acquisition unit 103. Next, the local mathematical feature calculation unit 104 derives a behavior of the target component and calculates local mathematical features based on the derived behavior. Then, the local mathematical feature calculation unit 104 transmits the calculated local mathematical features to the global mathematical feature calculation unit 106.

The local mathematical feature calculation unit 104 may determine whether or not the local mathematical features associated with the target component are stored in the component storage unit 102. When the local mathematical features associated with the target component are stored in the component storage unit 102, the local mathematical features may be read from the component storage unit 102 instead of calculating the local mathematical features.

In step S7, the local mathematical feature calculation unit 104 of the model checking device 10 generates component information based on the local mathematical features associated with the target component calculated in step S6 and the information regarding the target component. Next, the local mathematical feature calculation unit 104 stores the generated component information in the component storage unit 102. In the case where the local mathematical features are read from the component storage unit 102 in step S6, the local mathematical feature calculation unit 104 does not need to perform step S7.

In step S8, the local mathematical feature acquisition unit 105 of the model checking device 10 receives information regarding the target component from the model acquisition unit 103. Next, the local mathematical feature acquisition unit 105 determines whether or not the local mathematical features associated with the target component are stored in the component storage unit 102.

If the local mathematical features associated with the target component are stored (Yes in step S8), the local mathematical feature acquisition unit 105 proceeds to step S9. If the local mathematical features associated with the target component are not stored (No in step S8), the local mathematical feature acquisition unit 105 ends the model checking method. If the target model includes a component whose internal structure is unknown and whose local mathematical features cannot be acquired, model checking for the target model cannot be performed.

In step S9, the local mathematical feature acquisition unit 105 of the model checking device 10 reads the local mathematical features associated with the target component from the component storage unit 102. Next, the local mathematical feature acquisition unit 105 transmits the read local mathematical features to the global mathematical feature calculation unit 106.

In step S10, the global mathematical feature calculation unit 106 of the model checking device 10 receives the local mathematical features associated with the component included in the target model from the local mathematical feature calculation unit 104 and the local mathematical feature acquisition unit 105. Next, the global mathematical feature calculation unit 106 calculates global mathematical features associated with the target model based on the received local mathematical features. Then, the global mathematical feature calculation unit 106 transmits the calculated global mathematical features to the checking unit 107.

In step S11, the checking unit 107 of the model checking device 10 receives the global mathematical features from the global mathematical feature calculation unit 106. Next, the checking unit 107 performs model checking based on the received global mathematical features. For example, the checking unit 107 may perform model checking for the target model based on the compositional divide-and-conquer algorithm.

In step S12, the checking unit 107 of the model checking device 10 transmits checking results to the terminal device 20. The checking results include results of the model checking performed in step S11. For example, when the target model is a Markov decision process, the checking results may include an optimal expected reward and a control strategy for obtaining the optimal expected reward. The control strategy is a combination of actions to be taken at each position in the Markov decision process.

In step S13, the result display unit 203 of the terminal device 20 receives the checking results from the model checking device 10. Next, the result display unit 203 outputs the checking results to the display device 506 of the terminal device 20.

The user can analyze the target model by referring to the checking results that are output to the display device 506 of the terminal device 20. For example, when the user finds a defect in the target model, the user may correct the defect and then perform steps S3 through S13 again on the corrected target model.

### <Effects of Embodiment>

The model checking device 10 of the present embodiment acquires predetermined local mathematical features associated with components of a state transition model representing state transitions between a plurality of components, calculates global mathematical features associated with the state transition model based on the local mathematical features associated with the components, and verifies the state transition model based on the global mathematical features. In conventional model checking, it is not assumed that model checking is performed on models that include components having unknown internal structures. In one aspect, according to the present embodiment, model checking can be performed on state transition models that include components having unknown internal structures.

The model checking device 10 may acquire predetermined local mathematical features associated with a component having an unknown internal structure. The model checking device 10 may calculate local mathematical features associated with a component having a known internal structure. Accordingly, according to the present embodiment, model checking can be performed on state transition models that include both components having unknown internal structures and components having known internal structures.

The state transition model may be a quantitative state transition model for calculating quantitative measures . The quantitative measures may include a transition probability or a reward. The quantitative state transition model may be a Markov decision process or a mean-payoff game. The local mathematical features may include, for a component, a reachability probability from an input to an output of the component and an expected reward of the component. The global mathematical features may include an expected reward of the state transition model. Therefore, according to the present embodiment, model checking can be performed even when a quantitative state transition model, including a Markov decision process or a mean-payoff game, includes a component having an unknown internal structure.

As described above, according to the present embodiment, model checking can be performed even on a black-box model, provided that mathematical features describing a behavior of each component are known. Although model checking has been extensively studied and applied to industry, its applicability has been limited by the requirement that target models be white-box models.

The present embodiment is not limited to a Markov decision process. The present embodiment is applicable as long as a target system is a model that can be represented by a graph consisting of nodes and edges. For example, the present embodiment can be applied to a parity game or a mean-payoff game.

### [Application Example]

The model checking described in the above embodiment can be applied to guarantee the safety and reliability of any information system. Examples of the information system herein may include software, hardware (e.g., an integrated circuit (IC), etc.), cyber-physical systems (e.g., automobiles, aircraft, electrical products, power plants, etc.), and information systems that include an artificial intelligence (AI) as a component.

As an application example, an example of applying model checking to automobile development will be described. An automobile manufacturer receives components from many suppliers and manufactures an automobile, which is a final product. When an automobile manufacturer verifies a model derived from the design of an automobile, the automobile manufacturer can perform model checking if the supplier discloses only mathematical features to the automobile manufacturer without disclosing the internal structure of a component.

In this case, the supplier knows the internal structure of the component and can calculate the mathematical features based on its behavior. The supplier may provide mathematical features obtained experimentally or mathematical features determined by management judgment based on design specifications or the like as a performance guarantee of the component.

Therefore, the automobile manufacturer can perform model checking on a state transition model derived from the design of the automobile based on the model checking method according to the foregoing embodiment. The automobile manufacturer can develop and manufacture the automobile by reflecting results of model checking on the state transition model into the design of the automobile.

### [Supplemental Notes]

Each of the functions of the embodiments described above can be realized by one or more processing circuits. The term "processing circuit" in this specification includes a processor programmed to execute each of the functions by software, such as a processor implemented by an electronic circuit, and apparatuses such as an ASIC (application specific integrated circuit), a DSP (digital signal processor), an FPGA (field programmable gate array), and conventional circuit modules designed to execute each of the functions described above.

Although the embodiments of the present invention have been described in detail above, the present invention is not limited to these embodiments, and various modifications and alterations are possible within the scope of the present invention described in the appended claims.

This application claims the priority of Japanese Patent Application No. 2023-217272, filed in the Japanese Patent Office on December 22, 2023, which is hereby incorporated by reference in its entirety.

### REFERENCE SIGNS LIST

- 10: Model checking device
- 20: Terminal device
- 101: Component acquisition unit
- 102: Component storage unit
- 103: Model acquisition unit
- 104: Local feature calculation unit
- 105: Local feature acquisition unit
- 106: Global feature calculation unit
- 107: Checking unit
- 201: Component input unit
- 202: Model input unit
- 203: Result display unit
- 1000: Model checking system

## Claims

1. A model checking device comprising:
a model acquisition unit configured to acquire a state transition model representing state transitions between a plurality of components;
a local feature acquisition unit configured to acquire one or more predetermined local mathematical features associated with each of the plurality of components;
a global mathematical feature calculation unit configured to calculate one or more global mathematical features associated with the state transition model based on the local mathematical features associated with the plurality of components; and
a checking unit configured to perform model checking on the state transition model based on the one or more global mathematical features.

2. The model checking device according to claim 1, wherein
the local mathematical feature acquisition unit is configured to acquire one or more local mathematical features associated with a component of the plurality of components, the component having an unknown internal structure.

3. The model checking device according to claim 2, further comprising:
a local mathematical feature calculation unit configured to calculate one or more local mathematical features associated with a component of the plurality of components, the component having a known internal structure.

4. The model checking device according to any one of claims 1 to 3, wherein
the state transition model is a quantitative state transition model configured to calculate quantitative measures.

5. The model checking device according to claim 4, wherein
the quantitative measures include a transition probability or a reward.

6. The model checking device according to claim 4, wherein
the quantitative state transition model is a Markov decision process or a mean-payoff game.

7. The model checking device according to claim 4, wherein
the one or more local mathematical features include, for each of the plurality of components, a reachability probability from an input to an output of the component, and an expected reward of the component.

8. The model checking device according to claim 7, wherein
the global mathematical features include an expected reward of the state transition model.

9. The model checking device according to any one of claims 1 to 8, further comprising:
a component acquisition unit configured to accept input of component information for each of the plurality of components, wherein
the checking unit is configured to display checking results of the state transition model.

10. A model checking method performed by a computer, the method comprising:
acquiring a state transition model representing state transitions between a plurality of components;
acquiring one or more predetermined local mathematical features associated with each of the plurality of components;
calculating one or more global mathematical features associated with the state transition model based on the local mathematical features associated with the plurality of components; and
performing model checking on the state transition model based on the one or more global mathematical features.

11. A method for manufacturing an automobile, the method comprising:
performing model checking on a state transition model derived from a design of an automobile based on the model checking method according to claim 10; and
manufacturing the automobile based on checking results of the state transition model.

12. A program for causing a computer to perform:
acquiring a state transition model representing state transitions between a plurality of components;
acquiring one or more predetermined local mathematical features associated with each of the plurality of components;
calculating one or more global mathematical features associated with the state transition model based on the local mathematical features associated with the plurality of components; and
performing model checking on the state transition model based on the one or more global mathematical features.
